# FASCICULE DE BREVET EUROPEEN

(11) **EP 3 461 379 B1**
(45) Date de publication et mention de la délivrance du brevet: **15.12.2021**
(21) Numéro de dépôt: 18189492.4
(22) Date de dépôt: 26.03.2015
(51) Int. Cl.: A47J 27/08

(54) **AUTOCUISEUR A BAIONNETTE ET PROCEDE DE FABRICATION AFFERENT**
SCHNELLKOCHTOPF MIT BAJONETTVERSCHLUSS, UND ENTSPRECHENDES HERSTELLUNGSVERFAHREN
PRESSURE COOKER WITH BAYONET AND METHOD FOR MANUFACTURING SAME

(30) Priorité: 26.03.2014 FR 1452581
(43) Date de publication de la demande: 03.04.2019
(62) Demande divisionnaire de: 15717038.2
(73) Titulaire: SEB S.A., 69130 Ecully (FR)
(72) Inventeur: COLAS, Thomas Antoine, 21000 DIJON (FR); CHAMEROY, Eric, 21260 VERONNES (FR); CHAILLARD, Hubert, 52250 LONGEAU (FR)
(74) Mandataire: Weber, Jean-François

(56) Documents cités:
- WO-A1-2007/043086
- DE-A1- 3 703 448
- FR-A- 1 019 516
- GB-A- 641 540
- JP-U- S5 898 018

## Description

### DOMAINE TECHNIQUE

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant au moins une cuve et un couvercle destiné à être verrouillé relativement à la cuve pour former avec cette dernière une enceinte de cuisson apte à monter en pression, ainsi que des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle.

La présente invention concerne également un procédé de fabrication d'un appareil de cuisson d'aliments sous pression comportant au moins une cuve et un couvercle destiné à être verrouillé relativement à la cuve pour former avec cette dernière une enceinte de cuisson apte à monter en pression, ainsi que des moyens de verrouillage à baïonnette formant des première et deuxième séries d'excroissances qui sont solidaires respectivement de l'enveloppe du couvercle et de l'enveloppe de la cuve et qui sont destinées à coopérer ensemble pour assurer le verrouillage du couvercle.

### TECHNIQUE ANTERIEURE

Les appareils de cuisson d'aliments sous pression, en particulier à usage domestique, sont bien connus.

Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression.

Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve.

Il existe différents types de moyens de verrouillage bien connus dans l'art antérieur. L'un des systèmes les plus répandus est le système de verrouillage à baïonnette, qui repose sur la mise en œuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve. Un tel système de verrouillage à baïonnette donne globalement satisfaction, mais n'en présente pas moins certains inconvénients.

En particulier, de par leur conception même, les rampes de cuve et de couvercle présentent une résistance à la déformation, et en particulier à la flexion, qui est loin d'être optimale. Cela impose de recourir à des rampes d'épaisseur importantes qui s'étendent le long du périmètre de la cuve (respectivement le long du périmètre du couvercle) selon des longueurs relativement élevées, de façon à assurer une liaison des rampes de cuve et de couvercle susceptibles de satisfaire aux normes et spécifications particulièrement exigeantes en matière d'autocuiseurs domestiques. Certaines normes prévoient en particulier qu'un mécanisme de verrouillage d'autocuiseur à baïonnette doit résister à une pression d'épreuve de 500 kPa sans séparation de la cuve et du couvercle. Les systèmes de verrouillage à baïonnette classiques mis en œuvre dans les autocuiseurs connus reposent donc sur l'utilisation de rampes de couvercle et de cuve de grandes longueurs, ce qui confère à l'autocuiseur un caractère esthétique peu valorisant, du fait notamment de l'aspect relativement déstructuré du bord de cuve, dans lequel sont ménagées des encoches (permettant l'engagement des rampes de couvercle) qui s'étendent sur au moins la moitié du périmètre du bord de cuve.

Les systèmes de verrouillage à baïonnette mis en œuvre dans les autocuiseurs connus induisent donc nécessairement des conformations et dimensionnements des bords de cuve et de couvercle très spécifiques, qui limitent notamment les possibilités d'accessoirisation des autocuiseurs concernés, et en affectent significativement l'apparence générale.

De plus, en raison de la longueur relativement importante des rampes de cuve et de couvercle, il est nécessaire de faire tourner le couvercle relativement à la cuve selon une course angulaire relativement importante pour faire coïncider entièrement toutes les rampes de couvercle avec toutes les rampes de cuve correspondantes et obtenir ainsi un verrouillage efficace et sûr. Cette course angulaire importante peut en outre être difficile à effectuer en raison du frottement entre les rampes de cuve et de couvercle (ainsi que du joint d'étanchéité) qu'elle implique.

En définitive, les systèmes de verrouillage d'autocuiseurs à baïonnette connus ne sont absolument pas optimisés en regard notamment de leur comportement mécanique (résistance mécanique et résistance à la déformation), de leur poids, de leur esthétique, de leur ergonomie et de leur facilité d'utilisation. Concernant spécifiquement ce dernier point (facilité d'utilisation), il s'avère que la capacité des mécanismes de verrouillage à baïonnette connus à suggérer de manière naturelle et intuitive leur propre utilisation (capacité appelée généralement « *affordance* ») est loin d'être optimale.

Le document GB-641 540A décrit un appareil de cuisson sous pression dont la cuve et le couvercle sont munis de languettes d'attache complémentaires.

### EXPOSE DE L'INVENTION

L'invention se propose par conséquent de remédier aux différents inconvénients exposés précédemment et de proposer un nouvel appareil de cuisson sous pression dont le moyen de verrouillage est particulièrement performant, notamment sur le plan de la résistance à la déformation, tout en étant léger, sûr, de manipulation facile et présentant de bonnes propriétés d'affordance ainsi qu'une esthétique améliorée.

Un autre objet de l'invention vise à proposer un nouvel appareil de cuisson sous pression pourvu de moyens de verrouillage qui puisse être fabriqué de manière simple et à moindre coût, tout en étant particulièrement robuste et fiable.

Un autre objet de l'invention vise à proposer un nouvel appareil de cuisson sous pression qui procure un haut niveau de sécurité d'utilisation.

Un autre objet de l'invention vise à proposer un nouvel appareil de cuisson sous pression dont les moyens de verrouillage peuvent être fabriqués au moyen d'un outillage industriel dont le fonctionnement repose sur des principes bien connus et éprouvés.

Un autre objet de l'invention vise à proposer un nouvel appareil de cuisson sous pression dont la conception facilite le positionnement adéquat du couvercle relativement à la cuve.

Un autre objet de l'invention vise à proposer un nouvel appareil de cuisson sous pression dont la conception permet à l'utilisateur de s'assurer facilement et intuitivement du verrouillage correct du couvercle relativement à la cuve.

Un autre objet de l'invention vise à proposer un nouveau procédé de fabrication d'un appareil de cuisson sous pression qui repose sur des étapes particulièrement simples et économiques, tout en permettant d'obtenir un appareil de cuisson dotés de moyens de verrouillage extrêmement efficaces et sûrs.

Un autre objet de l'invention vise à proposer un nouveau procédé de fabrication d'un appareil de cuisson sous pression qui peut être mis en œuvre au moyen d'outils industriels simples et économiques.

Les objets de l'invention sont atteints à l'aide d'un appareil de cuisson d'aliments sous pression selon la revendication 1.

Les objets destinés à l'invention sont également atteints à l'aide d'un procédé de fabrication d'un appareil de cuisson d'aliments sous pression selon la revendication 11.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemple purement illustratif et non limitatif, dans lesquels :
- La figure 1 illustre, selon une vue en perspective schématique, un premier mode de réalisation d'un appareil de cuisson d'aliments sous pression conforme à l'invention, avec le couvercle séparé de la cuve.
- La figure 2 illustre, selon une vue schématique en perspective, l'appareil de la figure 1 avec le couvercle rapporté et verrouillé sur la cuve.
- La figure 3 illustre, selon une vue en coupe partielle, le couvercle de l'appareil des figures 1 et 2.
- La figure 4 illustre, selon une autre vue en coupe, le couvercle de la figure 3.
- La figure 5 illustre, selon une vue schématique en perspective partiellement de dessous, l'appareil des figures 1 et 2 alors que le couvercle est rapporté sur la cuve, contre le rebord supérieur libre de cette dernière, dans une configuration d'attente de verrouillage.
- La figure 6 illustre, selon une vue incomplète schématique en perspective partiellement de dessous, l'appareil de la figure 6 alors que le couvercle est rapporté et verrouillé sur la cuve.
- Les figures 7 et 8 sont des vues schématiques en coupe, selon deux plans de coupe respectifs, d'un détail de réalisation de l'autocuiseur de la figure 6.
- La figure 9 illustre, selon une vue schématique en coupe, la façon dont le joint d'étanchéité est positionné au sein d'un autocuiseur conforme à l'invention dont le couvercle est verrouillé sur la cuve.
- La figure 10 est une vue en coupe partielle illustrant elle aussi le positionnement du joint d'étanchéité dans le couvercle non verrouillé d'un autocuiseur conforme à l'invention.
- La figure 11 illustre, de façon schématique en vue de face, un exemple de conformation de rampe de couvercle, correspondant à la conformation mise en œuvre dans l'autocuiseur des figures 1 à 10.
- Les figures 12 et 13 illustrent, de façon schématique en vue de face, des conformations alternatives de rampes de couvercle susceptibles d'être mises en œuvre à la place, ou en association avec, les rampes de la figure 11.
- La figure 14 illustre, selon une vue de dessous, un appareil similaire à celui des figures précédentes (sauf en ce que ses moyens de verrouillage incluent huit excroissances de couvercle et de cuve et non dix comme dans les variantes des figures précédentes), en configuration de déverrouillage .
- La figure 15 illustre, selon une vue de dessous, l'appareil de la figure 14 en configuration de verrouillage.
- La figure 16 illustre, selon une vue de dessous, l'autocuiseur des figures 14 et 15 avec le couvercle rapporté sur la cuve dans une configuration incorrecte qui ne permet pas le verrouillage.
- La figure 17 illustre, selon une vue générale, un appareil de cuisson conforme à un second mode de réalisation de l'invention, dont le couvercle est verrouillé sur la cuve.
- La figure 18 est une vue agrandie d'un détail de la figure 17.
- La figure 19 illustre l'autocuiseur des figures 17 et 18 avec le couvercle déverrouillé et posé librement sur la cuve.
- Les figures 20 et 21 illustrent respectivement, selon des vues schématiques en perspective, le couvercle et la cuve d'un autocuiseur conforme à un troisième mode de réalisation non revendiqué en tant que tel.

### MEILLEURE MANIERE DE REALISER L'INVENTION

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semiprofessionnels.

L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu.

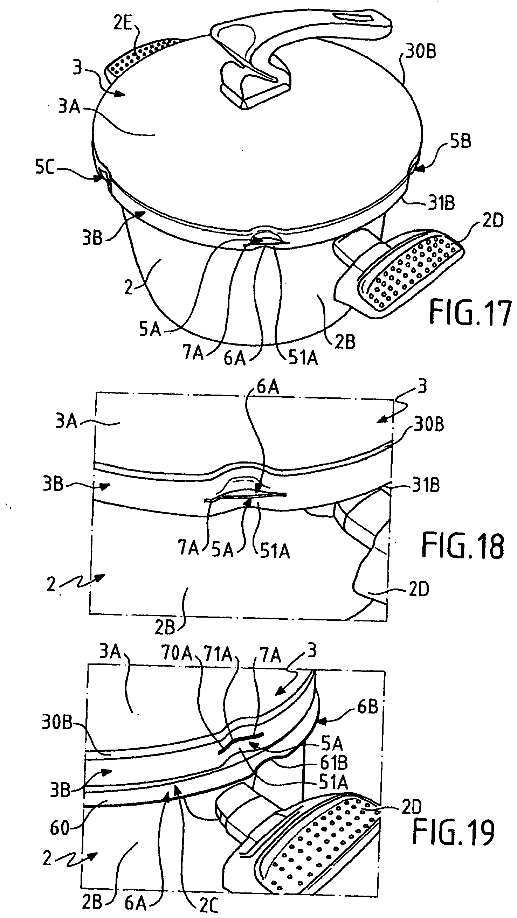

L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium, ou tout autre matériau approprié, revêtu (par exemple d'une couche de céramique, PTFE, émail, laque...) ou non. La cuve 2 comprend un fond 2A, qui est par exemple un fond thermo-conducteur multicouches solidarisé au reste de la cuve 2 par toute technique appropriée (par exemple par frappe à chaud). La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. La cuve 2 peut comporter également des organes de préhension, tels que des poignées de cuve 2D, 2E (cf. figures 17 à 19), préférentiellement au nombre de deux, et fixées par exemple sur la paroi latérale 2B de la cuve 2 de façon diamétralement opposée par rapport à l'axe central X-X'.

L'appareil 1 conforme à l'invention comprend également un couvercle 3 destiné à être associé à la cuve 2, pour former avec cette dernière une enceinte de cuisson. Plus précisément, le couvercle 3 est destiné à être verrouillé relativement à la cuve 2 pour former avec cette dernière une enceinte de cuisson apte à monter en pression, c'est-à-dire une enceinte de cuisson suffisamment hermétique pour permettre la montée en pression de l'appareil 1.

Afin d'obtenir ce caractère hermétique, étanche, l'appareil 1 inclut avantageusement une garniture d'étanchéité, tel qu'un joint annulaire 4 souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur.

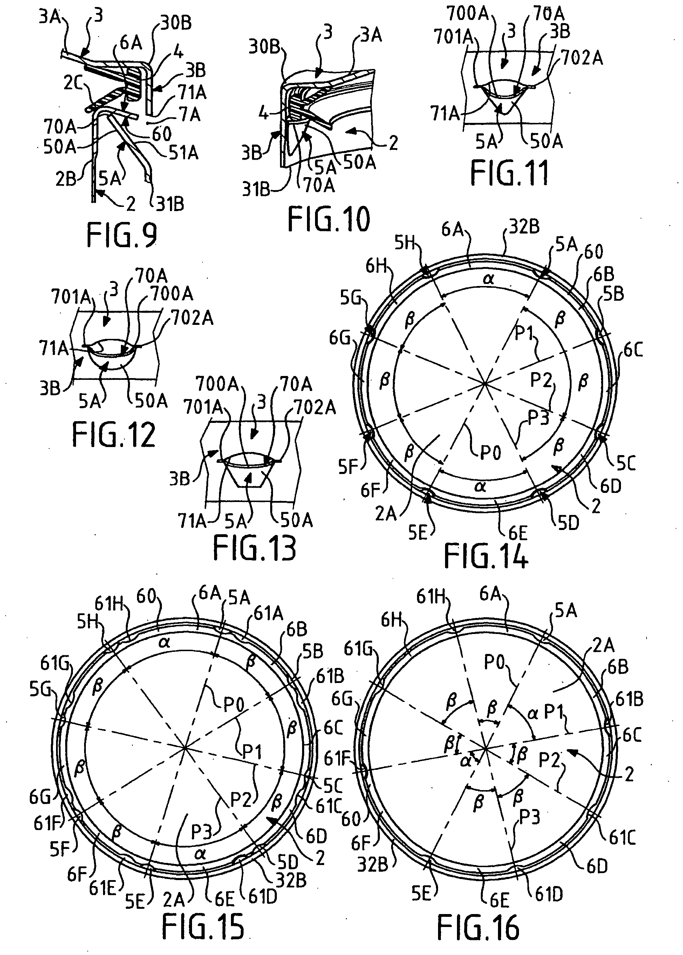

Le couvercle 3 est de manière classique fabriqué à partir d'un matériau métallique tel que l'acier inoxydable ou l'aluminium, ou tout autre matériau approprié, revêtu (par exemple d'une couche de céramique, PTFE, émail, laque...) ou non. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans les modes de réalisation illustrés aux figures, l'enveloppe du couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans les modes de réalisation illustrés aux figures, l'enveloppe du couvercle 3 inclut également une ceinture annulaire 3B, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B, lequel est par exemple lui-même prolongé par une collerette 32B (absente des variantes illustrées aux figures 9, 10 et 17 à 19). Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette 32B terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, comme cela est bien connu en tant que tel.

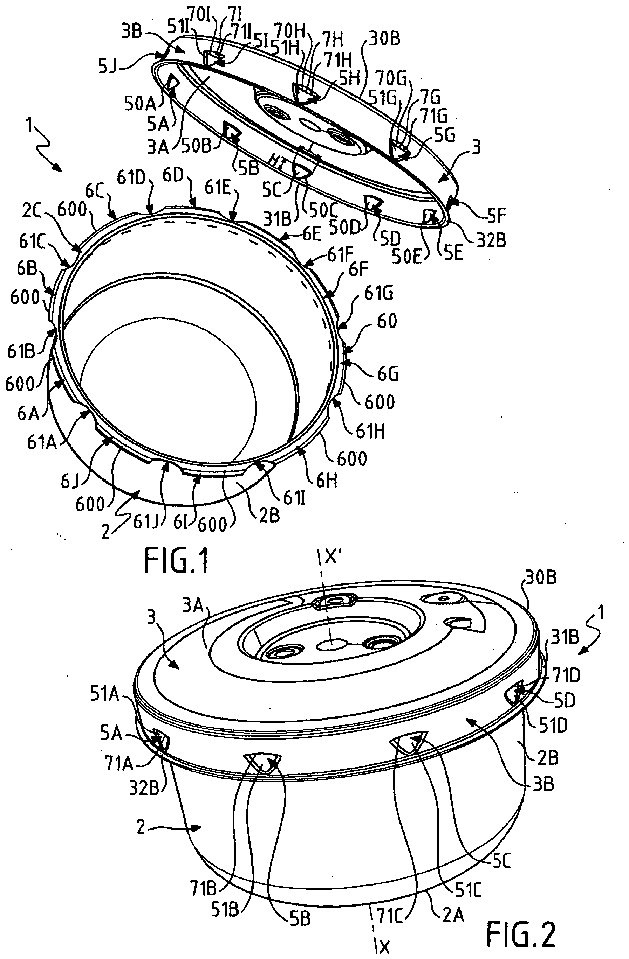

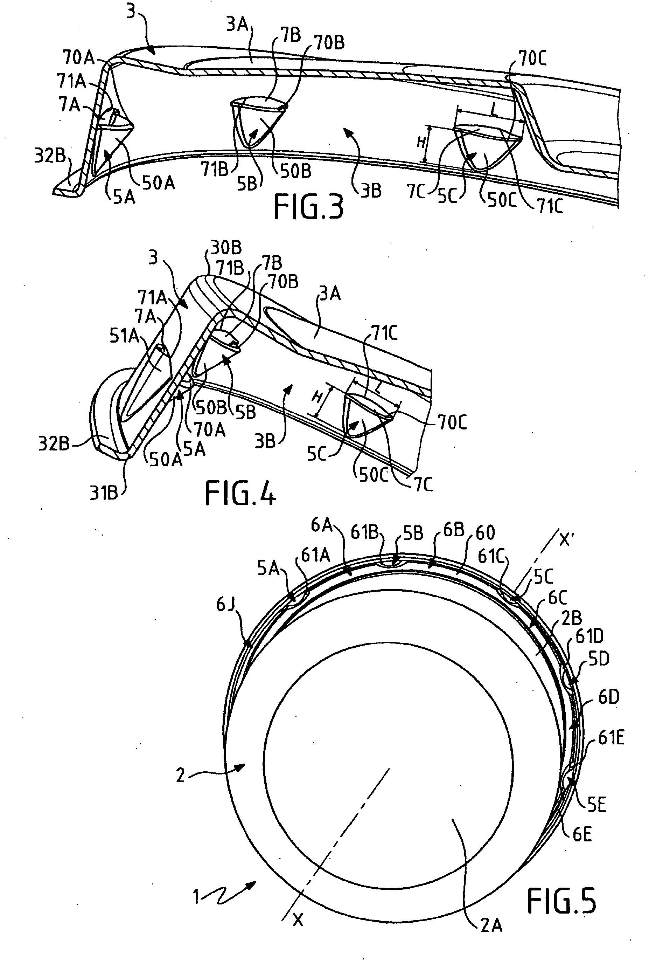

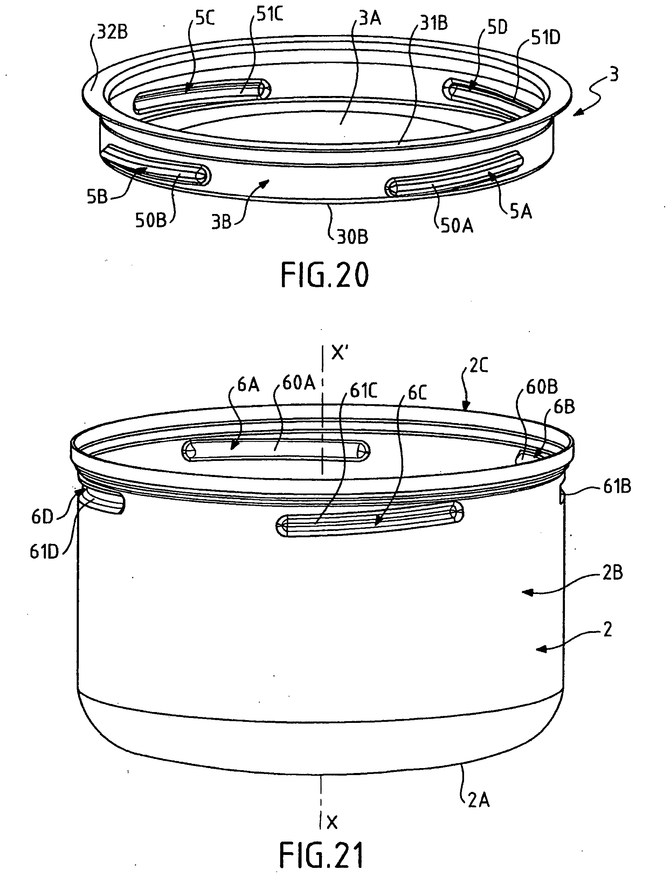

Dans les modes de réalisation des figures 1 à 19, la ceinture annulaire 3B est formée par un bord tombant qui s'étend vers le bas à partir de la périphérie de l'élément de couverture discoïde 3A. Dans ces modes de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C. Dans le mode de réalisation des figures 20 et 21, la ceinture annulaire 3B est cette fois destinée à être insérée au sein de la cuve 2, de façon à être entourée par, et contenue dans, la cuve 2. Dans ce cas, la collerette terminale 32B du couvercle 3 est ainsi destinée à venir reposer sur et contre le bord supérieur libre 2C de la paroi latérale annulaire 2B de la cuve 2.

L'appareil 1 de cuisson d'aliments sous pression conforme à l'invention comprend avantageusement un moyen de régulation de pression (non illustré), comme par exemple une soupape, montée de préférence sur le couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, et qui est de préférence de l'ordre de 100 kPa. Le principe de fonctionnement général d'un tel moyen de régulation de pression est bien connu en tant que tel, de sorte qu'il n'est pas nécessaire de le décrire plus avant ici.

L'appareil 1 de cuisson d'aliments sous pression peut comporter d'autres organes de fonctionnement (par exemple un doigt de sécurité sensible à la pression, une soupape de sécurité à la surpression, etc.) qui ne sont pas illustrés aux figures, lesquelles représentent uniquement des couvercles « *nus »* par souci de simplicité et de concision de description. Les figures 1 et 2 permettent en particulier de visualiser différents orifices ménagés à travers le couvercle 3 et destinés à mettre en communication l'intérieur de l'enceinte de cuisson avec les différents organes de fonctionnement (soupape de fonctionnement, soupape de sécurité, doigt de sécurité...) destinés à être montés sur le couvercle.

La cuve 2 et le couvercle 3 constituent ainsi des enveloppes respectives complémentaires, de préférence métalliques, qui une fois associées forment une enveloppe métallique résultante délimitant un volume fermé au sein duquel les aliments sont destinés à cuire sous pression de vapeur.

L'appareil 1 conforme à l'invention comporte également des moyens de verrouillage du couvercle 3 relativement à la cuve 2, afin de permettre à l'enceinte de cuisson formée par l'association du couvercle 3 et de la cuve 2 d'atteindre au moins la pression de fonctionnement sans risque de voir le couvercle 3 échapper sous l'effet de la pression régnant au sein de l'enceinte. Par « *moyens de verrouillage* » on désigne ici des moyens conçus pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson.

Conformément à l'invention, lesdits moyens de verrouillage sont des moyens de verrouillage à baïonnette, c'est-à-dire des moyens de verrouillage permettant d'attacher le couvercle 3 à la cuve 2 par rotation relative du couvercle 3 et de la cuve 2, de préférence selon l'axe central X-X', pour faire ainsi passer le couvercle 3 d'une configuration d'attente de verrouillage, dans laquelle le couvercle est rapporté sur la cuve 2 et repose librement sur cette dernière, à une configuration de verrouillage dans laquelle la cuve 2 et le couvercle 3 interagissent pour empêcher leur libre séparation. Les moyens de verrouillage à baïonnette de l'appareil de cuisson 1 forment à cet effet une première série d'excroissances 5A-5J et une deuxième série d'excroissances 6A-6J qui sont solidaires respectivement de l'enveloppe du couvercle 3 et de l'enveloppe de la cuve 2, et qui sont destinées à coopérer ensemble pour assurer le verrouillage du couvercle 3 relativement à la cuve 2. Comme cela est bien connu en tant que tel, les excroissances 5A-5J, 6A-6J de chaque série coopèrent deux à deux, c'est-à-dire que chaque excroissance de l'une desdites séries est amenée, par rotation du couvercle 3 relativement à la cuve 2, à passer sous une excroissance correspondante de l'autre série. Cette coopération mécanique des excroissances 5A-5J, 6A-6J de chaque série réalise ainsi un interverrouillage qui empêche toute séparation intempestive du couvercle 3 et de la cuve 2, puisqu'en réaction à un effort de séparation du couvercle 3 et de la cuve 2 s'exerçant selon la direction verticale (matérialisée par l'axe central X-X'), les excroissances superposées deux à deux viennent en appui mutuel de blocage.

Dans les modes de réalisation illustrés aux figures 1 à 19, les excroissances 5A-5J de la première série (solidaires de l'enveloppe du couvercle 3) font saillie radialement vers l'intérieur du couvercle 3, tandis que les excroissances 6A-6J de la deuxième série (solidaire de l'enveloppe de la cuve 2) font saillie radialement, à partir de l'enveloppe de la cuve 2, vers l'extérieur de cette dernière. Il est cependant parfaitement envisageable, par exemple conformément au mode de réalisation alternatif des figures 20 et 21, que les excroissances 5A-5D de la première série fassent saillie vers l'extérieur du couvercle 3 (cf. figure 20), et que les excroissances 6A-6D de la deuxième série fassent saillie, à partir de ladite enveloppe de la cuve 2, vers le centre de cette dernière. L'invention n'est donc pas limitée à une configuration particulière des rampes de verrouillage, l'essentiel étant que des excroissances de couvercle 5A-5J et de cuve 6A-6J, formant respectivement des rampes de couvercle et de cuve, coopèrent ensemble par mise en rotation relative de la cuve 2 du couvercle 3, en l'espèce selon l'axe X-X', pour que les rampes de couvercle viennent se positionner sous (ou éventuellement sur) les rampes de cuve afin de réaliser une liaison mécanique entre la cuve 2 et le couvercle 3 capable de résister à la pression interne régnant dans l'enceinte de cuisson.

Conformément à l'invention, chaque excroissance d'au moins l'une desdites séries d'excroissances est constituée par un élément en volume, c'est-à-dire un élément tridimensionnel qui présente une surface essentiellement non plane, courbe, par exemple gauche. Un tel élément en volume se distingue donc d'une simple languette plate du style de celles formant les rampes de cuve et de couvercle dans l'art antérieur. Ledit élément en volume présente des faces convexe 50A-50J et concave 51A-51J opposées. Dans les modes de réalisation illustrés aux figures 1 à 19, les excroissances 5A-5J de la première série font saillie radialement vers l'intérieur du couvercle 3, de sorte que la face convexe 50A-50J de chaque élément en volume est disposée en regard de l'intérieur de l'appareil 1. Ledit élément en volume est formé par une déformation radiale localisée de l'enveloppe (de cuve et/ou de couvercle) correspondante. En d'autres termes, chaque élément en volume est formé par une déformation volumique locale de la matière constitutive de l'enveloppe de la cuve 2 et/ou du couvercle 3.

Chaque élément en volume forme ainsi une protubérance, qui vient de matière avec l'enveloppe concernée (de couvercle et/ou de cuve) et qui fait saillie de ladite enveloppe en définissant d'un côté une face convexe 50A-50J et de l'autre côté, en « *négatif* », une face concave 51A-51J correspondant par exemple à l'empreinte d'application d'un outil de formage.

Le recours à de tels éléments en volume pour former la première et/ou la deuxième série d'excroissances des moyens de verrouillage à baïonnette permet d'obtenir aisément, par simple déformation de matière, une excroissance qui présente d'excellentes propriétés mécaniques, et en particulier une résistance à la flexion bien supérieure à celle des languettes métalliques mises en oeuvre dans les moyens de verrouillage à baïonnette des autocuiseurs connus. Le recours à un élément en volume obtenu par déformation radiale localisée de l'enveloppe du couvercle 3 et/ou de la cuve 2 permet en effet d'obtenir une excroissance de verrouillage présentant une section de moment quadratique élevé relativement à l'axe vertical d'application des efforts de verrouillage exercés par l'excroissance correspondante de l'autre série. En outre, tout effet de charnière, particulièrement préjudiciable à la résistance en flexion, est minimisé grâce à la nature tridimensionnelle de l'élément en volume, au fait qu'il vient de matière avec l'enveloppe dont il est issu et qu'il est raccordé à ladite enveloppe selon un contour de raccordement qui n'est pas purement rectiligne et s'étend selon plusieurs directions de l'espace. Cette continuité de matière (provenant du fait que l'élément en volume est obtenu par une déformation radiale localisée) et le caractère volumique de l'excroissance ainsi obtenue conduisent à l'obtention d'une rampe de verrouillage extrêmement rigide et présentant une résistance élevée à la flexion, même lorsque l'élément en volume est très localisé et ne s'étend pas sur une longueur significative du périmètre de l'enveloppe (du couvercle 3 et/ou de la cuve 2) dont il est issu. L'invention permet en particulier d'obtenir aisément des excroissances 5A-5J de verrouillage présentant un rapport longueur L sur hauteur H inférieur à 4, de préférence inférieur à 3, de façon encore plus préférentielle inférieur à 2.

Grâce à l'invention, il est ainsi possible d'obtenir des excroissances de verrouillage à baïonnettes qui n'ont pas besoin d'être longues, ni d'être fabriquées à partir de tôle épaisse, pour présenter des propriétés mécaniques suffisantes.

Cette longueur moindre permet de réduire significativement l'amplitude du déplacement angulaire requis pour faire coopérer ensemble les première et deuxième séries d'excroissances 5A-5J, 6A-6J.

Grâce à la dimension réduite des éléments en volume, il est possible de passer de la configuration de pré-verrouillage du couvercle 3 relativement à la cuve 2 à la configuration de verrouillage du couvercle 3 relativement à la cuve 2 par rotation relative du couvercle 3 de la cuve 2 selon un angle relativement faible, par exemple inférieur à 30°, et de façon encore plus préférentielle inférieur à 20°, par exemple de l'ordre de 15°.

Dans les modes de réalisation illustrés aux figures 1 à 19, lesdits éléments en volume forment les excroissances 5A-5J de la première série solidaires de l'enveloppe du couvercle 3. Chaque excroissance 5A-5J de la première série d'excroissances est donc dans ce cas constituée par un élément en volume comme décrit ci-avant (c'est-à-dire un élément en volume présentant des faces convexe 50A-50J et concave 51A-51J opposées et formé par une déformation radiale localisée de l'enveloppe du couvercle 3), tandis que les excroissances de la deuxième série d'excroissances se présentent par exemple (comme décrit plus en détails dans ce qui suit) sous la forme de languettes métalliques qui s'étendent radialement à partir du bord supérieur libre 2C de la cuve 2, en l'espèce vers l'extérieur de la cuve 2. Plus précisément, dans les modes de réalisation des figures 1 à 19, les éléments en volume formant les excroissances 5A-5J de la première série d'excroissances sont localisés sur la ceinture annulaire 3B, et sont donc chacun formés par déformation radiale localisée de la matière formant ladite ceinture annulaire 3B, chaque élément en volume ainsi formé faisant en l'espèce saillie radialement vers l'intérieur du couvercle 3. Il est bien entendu parfaitement envisageable, conformément au mode de réalisation alternatif illustré aux figures 20 et 21, que les excroissances 5A-5D solidaires de l'enveloppe du couvercle 3 soient formés par des éléments en volume qui font saillie vers l'extérieur du couvercle, et que les excroissances 6A-6D solidaires de la cuve 2 soient elles aussi constituées par des éléments en volume (et non par des languettes métalliques), qui font saillie vers l'intérieur de la cuve 2. L'invention concerne donc toutes les combinaisons possibles d'excroissances, dans la mesure où au moins l'une des séries d'excroissances est formée par des éléments en volume tels que décrits précédemment.

Avantageusement, et comme illustré aux figures 1 à 19, les excroissances 6A-6J de la deuxième série sont formées par un rebord annulaire 60 qui déborde vers l'extérieur à partir du bord supérieur libre 2C, des encoches 61A-61J de passage desdits éléments en volume étant ménagées à travers ledit rebord annulaire 60, de sorte que les portions dudit rebord annulaire 60 s'étendant entre chaque encoche 61A-61J forment des rampes de cuve destinées à coopérer avec les excroissances 5A-5J de la première série solidaires de l'enveloppe du couvercle 3. Le rebord annulaire 60 se présente ainsi avantageusement sous la forme d'une couronne sensiblement plate, qui s'étend sensiblement horizontalement ou selon une légère inclinaison vers le bas, et au travers de laquelle sont ménagées, par exemple par découpe de la matière formant le rebord annulaire 60, les encoches 61A-61J qui permettent le passage des excroissances 5A-5J de couvercle. Les encoches présentent avantageusement un profil arrondi, conjugué à celui des éléments en volume. Ainsi, lorsque le couvercle 3 vient coiffer la cuve 2, les éléments en volume qui font saillie de la ceinture annulaire 3B peuvent passer par les encoches 61A-61J pour se retrouver positionnés plus bas que le rebord annulaire 60. Le couvercle 3 se trouve alors dans une configuration de préverrouillage, à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 5A-5J du couvercle 3 et les encoches 61A-61J du rebord annulaire 60, réalisant ainsi un verrouillage de type *« à baïonnettes* ». De préférence, comme cela ressort notamment des figures 1, 7 et 8, le rebord annulaire 60 inclut une collerette qui s'étend sensiblement radialement et vers l'extérieur à partir dudit bord supérieur libre 2C, ainsi qu'une jupe 600 qui s'étend sensiblement vers le bas entre un bord supérieur 600A solidaire de la collerette et un bord inférieur libre 600B contre lequel les excroissances de la première série (en l'espèce les élément en volume formant les rampes de couvercle 3) sont destinées à venir en appui pour verrouiller le couvercle 3 relativement à la cuve 2. Ce mode de réalisation s'avère particulièrement avantageux sur le plan mécanique, car il permet de conférer à la rampe de cuve un moment quadratique particulièrement élevé selon la direction verticale X-X', conduisant ainsi à l'obtention d'une liaison mécanique particulièrement stable et robuste entre la cuve 2 et le couvercle 3.

De préférence, la jupe 600 est discontinue, et n'est pas présente au niveau des encoches 61A-61J, même s'il est tout à fait envisageable, à titre alternatif, que la jupe 600 s'étende continûment sur tout le périmètre du rebord annulaire 60, encoches 61A-61J comprises, sans, pour autant que l'on sorte du cadre de l'invention.

Avantageusement, la déformation radiale localisée de l'enveloppe formant ledit élément en volume est elle-même obtenue par emboutissage de l'enveloppe en question, afin d'obtenir l'élément en volume par déformation plastique localisée du matériau formant ladite enveloppe. Le recours à l'emboutissage permet d'obtenir de façon particulièrement simple, rapide et à moindre coût un élément en volume particulièrement rigide et robuste, présentant en particulier d'excellentes propriétés de résistance à la flexion selon la direction verticale.

De préférence, conformément au mode de réalisation des figures 1 à 16, chacun desdits éléments en volume est formé par un crevé, c'est-à-dire que la déformation radiale localisée de la matière formant l'élément en volume s'accompagne de la présence d'une ouverture ménagée à travers l'enveloppe concernée. L'ouverture en question est avantageusement adjacente à l'élément en volume correspondant, et peut être obtenue directement lors de l'emboutissage, par déchirure localisée et contrôlée de la matière formant l'enveloppe sous l'effet de l'opération d'emboutissage, ou au contraire être réalisée préalablement ou postérieurement à l'opération de déformation (par exemple au moyen d'un faisceau laser de découpe ou de tout autre outil de découpe). Chaque élément de volume peut être formé par un crevé simple, comme illustré, ou alternativement par un crevé double. Le recours à un crevé s'avère particulièrement avantageux car il permet d'obtenir, comme cela ressortira plus en détails de la description qui suit, un élément en volume particulièrement rigide et résistant à la flexion, extrêmement simple, rapide et bon marché à fabriquer.

Ainsi, chaque élément en volume du mode de réalisation des figures 1 à 16 est associé à une ouverture 7A-7J respective qui est ménagée à travers l'enveloppe correspondante (c'est-à-dire en l'espèce l'enveloppe du couvercle 3, et plus précisément la ceinture annulaire 3B) et est délimitée par au moins un bord 70A-70J, et de préférence par au moins deux bords opposés (par exemple un premier bord longitudinal 70A-70J et un deuxième bord longitudinal 71A-71J). L'ouverture est donc une ouverture traversante ménagée à travers toute l'épaisseur de l'enveloppe concernée. Ladite déformation radiale localisée formant ledit élément en volume concerné est positionnée relativement à ladite ouverture 7A-7J respective de façon qu'au moins une portion dudit bord 70A-70J (en l'espèce le premier bord longitudinal précité, qui correspond au bord inférieur dans les variantes illustrée aux figures 1 à 19) soit déformée radialement pour présenter un profil courbe et fasse partie dudit élément en volume associé. Dans les modes de réalisation illustrés aux figures 1 à 16, ladite déformation radiale localisée consiste à repousser le bord inférieur 70A-70J de l'ouverture 7A-7J vers le centre du couvercle 3, de façon à faire ainsi passer le bord 70A-70J d'un profil initial (avant déformation radiale) qui suit la courbure de l'enveloppe du couvercle 3 (c'est-à-dire en l'espèce la courbure de la ceinture annulaire 3B), à un profil incurvé qui s'inscrit avantageusement dans un plan sensiblement horizontal, c'est-à-dire perpendiculaire à l'axe central X-X'. Dans les exemples des figures 1 à 16, ledit bord 70A-70J de l'ouverture 7A-7J forme le sommet dudit élément en volume, et forme de façon encore plus préférentielle une face d'appui contre laquelle est destinée à venir en appui une excroissance de l'autre série (en l'espèce une rampe de cuve correspondante). En d'autres termes, ledit bord 70A-70J de profil courbe est destiné à venir se glisser sous les rampes de cuve 2 pour assurer le verrouillage du couvercle 3 relativement à la cuve 2. De préférence, conformément au mode de réalisation des figures 1 à 16, seul le bord inférieur 70A-70J de l'ouverture 7A-7J est déformé radialement pour présenter un profil courbe, le bord supérieur opposé 71A-71J n'étant quant à lui sensiblement pas déformé et restant donc inscrit dans la continuité de l'enveloppe correspondante (en l'espèce l'enveloppe du couvercle 3, et plus précisément la ceinture annulaire 3B). Il est cependant tout à fait envisageable, comme dans le mode de réalisation des figures 17 à 19, que la déformation radiale localisée destinée à former l'élément en volume soit pratiquée de façon à déformer radialement et de façon analogue à la fois le bord inférieur 70A et le bord supérieur 71A de l'ouverture.

Dans ce mode de réalisation des figures 17 à 19, les excroissances 6A-6J formant les rampes de verrouillage de la cuve 2 viendront ainsi s'insérer dans l'ouverture, entre les bords inférieur 70A et supérieur 71A de cette dernière (cf. figure 19), le bord inférieur 70A déformé venant en butée contre l'excroissance 6A correspondante pour empêcher la séparation du couvercle 3 et de la cuve 2.

Le recours à un bord 70A-70J déformé radialement pour former la face mécaniquement active des excroissances de verrouillage s'avère particulièrement avantageux, car il permet d'obtenir des excroissances extrêmement rigides et résistante à la flexion, avec un moment quadratique élevé relativement à la direction verticale matérialisée par l'axe central X-X'.

De préférence, la projection orthogonale de chaque ouverture 7A-7J sur un plan radial se présente sous la forme d'une fente allongée sensiblement rectiligne ou cintrée qui s'étend longitudinalement selon une direction globalement horizontale. Chaque ouverture 7A-7J se présente avantageusement, préalablement à la déformation radiale du bord 70A-70J, sous la forme d'une fente allongée sensiblement droite ou incurvée qui s'inscrit sensiblement dans un plan d'extension moyen perpendiculaire à l'axe central vertical X-X'. De préférence, chaque ouverture 7A-7J est réalisée par enlèvement de matière localisée, par exemple par découpe, de l'enveloppe correspondante du couvercle 3 et/ou de la cuve 2. Dans les modes de réalisation illustrés aux figures 1 à 19 qui mettent en œuvre une ouverture 7A-7J respective associée à chaque élément en volume, chaque ouverture 7A-7J est ainsi directement découpée dans la ceinture annulaire 3B. Avantageusement, le bord 70A-70J est formé par une portion centrale 700A (cf. figures 11 à 13) encadrée de part et d'autre par deux portions extrémales 701A, 702A, seule ladite portion centrale étant déformée radialement pour présenter un profil courbe, de sorte que lesdites portions extrémales 701A, 702A ne font pas partie dudit élément en volume. Dans les exemples des figures 11 à 13, les portions extrémales 701A, 702A suivent ainsi la courbure de la ceinture annulaire 3B, de façon à s'inscrire dans la continuité de cette dernière, au contraire de la portion centrale 700A qui elle fait saillie, en l'espèce vers le centre du couvercle 3, de la ceinture annulaire 3B, pour former une sorte de gousset dont le bord supérieur libre est destiné à venir en appui contre les rampes de cuve pour assurer le verrouillage du couvercle 3 relativement à la cuve 2. En d'autres termes, la déformation radiale visant à former l'élément en volume n'est pas pratiquée sur toute la longueur du bord 70A-70J, mais seulement sur une portion centrale de ce dernier (qui forme de préférence l'essentiel dudit bord 70A-70J), afin d'éviter toute déchirure incontrôlée de matière vers les extrémités du bord 70A-70J sous l'effet de l'effort de déformation exercé sur l'enveloppe pour former l'élément en volume.

Comme illustré aux figures, chaque élément en volume est avantageusement formé par une coque délimitée par un bord périphérique dont une première portion est localisée sur, et attachée à, l'enveloppe correspondante et dont une deuxième portion (formée par exemple en l'espèce par la portion centrale 700A) est libre et forme ladite face d'appui contre laquelle est destinée à venir en appui une excroissance 6A-6J de l'autre série. Ainsi, la première portion dudit bord périphérique s'inscrit sur la surface de l'enveloppe dont est issu l'élément en volume concerné, tandis que la deuxième portion fait saillie de ladite enveloppe pour former une excroissance de verrouillage. Avantageusement, la deuxième portion du bord périphérique de la coque formant l'élément en volume s'étend sensiblement dans un plan horizontal, perpendiculaire à l'axe central X-X', et s'étend de préférence selon un profil bombé entre deux extrémités localisées sur, et attachées à, l'enveloppe dont est issu l'élément en volume concerné (c'est-à-dire, dans les modes de réalisation illustrés aux figures, la ceinture annulaire 3B du couvercle 3). De préférence, ladite première portion du bord périphérique de la coque formant l'élément en volume s'étend au moins en partie selon un profil évasé du bas vers le haut, par exemple un profil sensiblement en V (figure 11) ou en U (figures 12 et 13). Comme illustré aux figures, ladite première portion du bord périphérique de la coque s'étend longitudinalement entre deux extrémités qui correspondent respectivement aux deux extrémités entre lesquelles s'étend longitudinalement la deuxième portion du bord périphérique, formée en l'occurrence par la portion centrale 700A du bord 70A-70J de l'ouverture 7A-7J concernée. Chaque élément en volume s'étend ainsi, selon la direction verticale matérialisée par l'axe central X-X', entre un pied et un sommet, ledit sommet étant formé par ladite deuxième portion du bord périphérique de la coque formant l'élément en volume concerné. Avantageusement, ladite première portion est elle-même formée d'au moins deux segments qui convergent l'un vers l'autre du sommet vers le pied.

De préférence, chaque élément en volume est symétrique par rapport à un plan radial médian P0-P3. Plus précisément, dans l'exemple de la figure 11, la première portion du bord périphérique inclut deux portions inclinées en V dont les extrémités inférieures se rejoignent et dont les extrémités supérieures sont reliées par la portion centrale 700A déformée radialement. Dans le mode de réalisation de la figure 12, la première portion du bord périphérique de la coque présente une forme continûment arrondie qui s'étend entre deux extrémités supérieures libres reliées par la portion centrale 700A déformée radialement. Enfin, dans le mode de réalisation de la figure 13, la première portion du bord périphérique de la coque formant l'élément en volume inclut deux tronçons inclinés reliés par un tronçon horizontal, de façon à présenter globalement une forme en « *barque* » dont les extrémités supérieures libres sont reliées entre elles par la portion centrale 700A déformée radialement.

Les éléments en volume servent également, en particulier lorsqu'ils présentent une forme de gousset en V comme illustré aux figures 1 à 16, de support pour le joint d'étanchéité 4, qui est ainsi retenu par les goussets lorsque le couvercle 3 est séparé de la cuve 2, aucun élément supplémentaire de maintien du joint 4 relativement au couvercle 3 n'étant dès lors nécessaire. Le joint d'étanchéité 4, qui est avantageusement un joint à lèvres, peut en outre être facilement dissocié du couvercle 3, et encore plus facilement être remis en place grâce à la forme « *conique* » des goussets formant les éléments en volume, forme qui permet au joint 4 de glisser jusqu'à ce qu'il atteigne sa position finale d'appui contre et sur le bord supérieur libre 70A-70J des goussets (cf. figure 10).

Bien entendu, l'invention n'est en aucun cas limitée à une forme particulière de bord périphérique, même si une forme sensiblement convergente du haut vers le bas, comme illustré aux figures 11 à 13, s'avère particulièrement avantageuse en facilitant l'autopositionnement des éléments en volume dans les encoches 61A-61J correspondantes ménagées à travers le rebord annulaire 60 de la cuve 2.

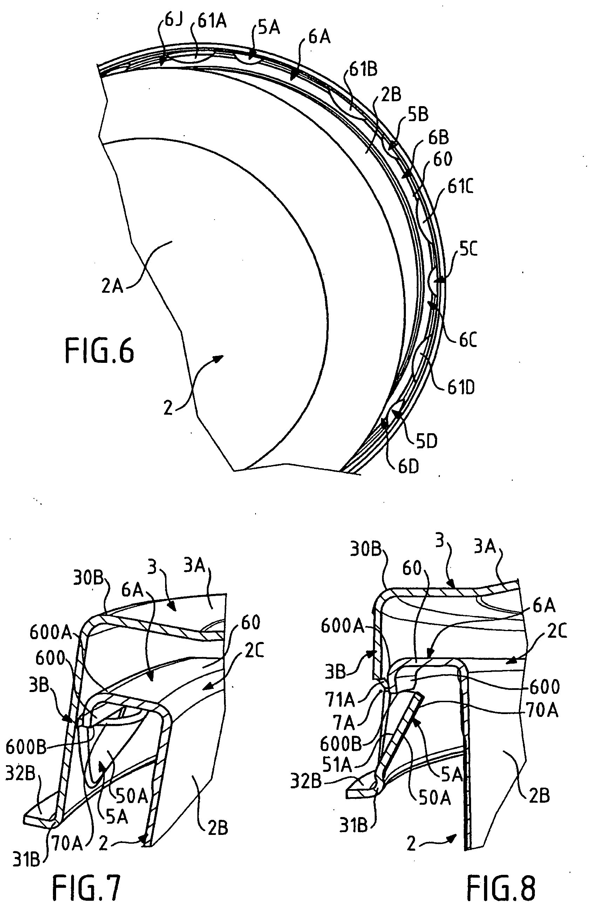

Avantageusement, comme cela ressort en particulier de la figure 8, chaque élément en volume présente, en projection sur un plan radial P0-P3, un profil évasé du pied vers le sommet.

Ainsi, chaque élément en volume se présente avantageusement sous la forme d'un gousset qui converge de haut en bas à la fois dans le plan radial P0-P3 et dans le plan tangentiel (i.e. le plan de la feuille des figures 11 à 13), ce qui permet de faciliter l'autopositionnement des goussets dans les encoches 61A-61J correspondantes ménagées à travers le rebord annulaire de la cuve 2.

Il est par ailleurs envisageable que les rampes de cuve et de couvercle soient réparties à équidistance angulaire les unes des autres. Toutefois, selon une variante préférée, illustrée aux figures 14 à 16, les éléments en volume (formés en l'espèce par des goussets emboutis), de même que les encoches 61A-61J correspondantes ménagées à travers le rebord annulaire 60 de la cuve 2, sont régulièrement espacés d'un premier angle β, sauf quatre d'entre eux qui sont espacés deux à deux d'un second angle α. Une telle disposition angulaire irrégulière présente le double avantage suivant :
- une fois le couvercle 3 verrouillé relativement à la cuve 2 (figure 15), le second angle a, choisi avantageusement pour être supérieur au premier angle β, créera dans la structure métallique une zone de déformation préférentielle au niveau de laquelle le joint d'étanchéité 4 pourra préférentiellement s'échapper (fluage) en cas de surpression anormale, afin de créer une fuite de vapeur et faire ainsi chuter la pression interne.
- la mise en oeuvre de deux angles différents α et β autorise la mise en place du couvercle 3 uniquement dans deux positions relatives seulement (dont l'une est illustrée à la figure 14), symétriques par rapport à l'axe X-X'. La figure 16 montre en revanche que si les goussets 5A-5J du couvercle 3 ne sont pas présentés dans la position requise relativement aux encoches 61A-61J correspondantes de la cuve 2, alors seuls deux d'entre eux 5A, 5E pourront être présentés au droit d'encoches de la cuve 2, ce qui empêche tout positionnement relatif incorrect de la cuve 2 et du couvercle 3.

Il est cependant parfaitement envisageable, pour favoriser l'équilibre des forces, que les angles α et β soient égaux, auquel cas les goussets 5A-5J sont régulièrement espacés angulairement, ou que tous les goussets 5A-5J soient régulièrement espacés angulairement d'un même angle sauf deux d'entre eux séparés d'un angle différent, de façon à autoriser la mise en place du couvercle 3 uniquement dans une seule position relative.

De préférence, dans les modes de réalisation des figures 1 à 16, les éléments en volume sont localisés sur la ceinture annulaire 3B du couvercle 3 à distance du second bord circulaire libre 31 B de ladite ceinture 3B, de manière à ce que la ceinture annulaire 3B forme, en deçà des éléments en volume, une jupe d'auto-centrage du couvercle 3 relativement à la cuve 2.

Cette jupe d'auto-centrage permet, en coopération avec le rebord latéral 60 quasi-continu (à l'exception des encoches 61A-61J) de la cuve 2, au couvercle 3 de se positionner naturellement et spontanément de manière centrée relativement à la cuve 2 lorsqu'il est déposé sur cette dernière.

L'invention concerne par ailleurs en tant que tel un procédé de fabrication d'un appareil 1 de cuisson d'aliments sous pression, et en particulier de fabrication d'un appareil conforme à la description qui précède. Par conséquent, l'ensemble de la description qui précède concernant l'appareil 1 en tant que tel reste parfaitement valable et applicable, *mutatis mutandis,* au procédé de fabrication selon l'invention, et réciproquement.

Le procédé en question est donc un procédé de fabrication d'un appareil 1 de cuisson d'aliments sous pression comportant au moins :
- une cuve 2 et un couvercle 3 destiné à être verrouillé relativement à la cuve 2 pour former avec cette dernière une enceinte de cuisson apte à monter en pression,
- des moyens de verrouillage à baïonnettes formant des première et deuxième séries d'excroissances 5A-5J, 6A-6J qui sont solidaires respectivement de l'enveloppe du couvercle 3 et de l'enveloppe de la cuve 2 et qui sont destinées à coopérer ensemble pour assurer le verrouillage du couvercle 3 relativement à la cuve 2.

Conformément au procédé selon l'invention, chaque excroissance d'au moins l'une desdites séries d'excroissances 5A-5J, 6A-6J est constituée par un élément en volume qui présente des faces convexes 50A-50J et concaves 51A-51J opposées, ledit procédé comportant une étape de formation dudit élément en volume par déformation radiale localisée de l'enveloppe correspondante. Avantageusement, ladite déformation radiale localisée de l'enveloppe est réalisée par emboutissage de la matière constitutive de l'enveloppe. Il est cependant parfaitement envisageable de recourir à toute autre technique de déformation de la matière, comme par exemple la technique d'hydroformage ou la technique de magnétoformage (particulièrement indiquée pour la réalisation de la cuve et du couvercle illustrés respectivement aux figures 20 et 21), sans pour autant que l'on sorte du cadre de l'invention.

Avantageusement, le procédé comprend une étape de réalisation, à travers ladite enveloppe, d'une ouverture délimitée par au moins un bord 70A-70J. De préférence, ladite ouverture est réalisée par une opération de découpe au laser de l'enveloppe, ce qui permet d'opérer une découpe précise et rapide, étant entendu que d'autres moyens de découpe pourraient éventuellement être mis en œuvre. Avantageusement, l'étape de réalisation de l'ouverture est effectuée avant l'étape de formation dudit élément en volume, ladite étape de formation dudit élément en volume étant mise en oeuvre pour déformer radialement ledit bord 70A-70J afin qu'il présente un profil courbe et fasse partie dudit élément en volume associé.

Ainsi, dans le mode de réalisation particulièrement avantageux illustré aux figures 1 à 16, le procédé comprend tout d'abord une étape d'emboutissage d'un flan métallique discoïde, afin d'obtenir un élément de couvercle en forme de coupelle avec un élément de couverture discoïde 3A prolongé à sa périphérie par un bord tombant formant une ceinture annulaire 3B. L'élément de couvercle ainsi obtenu est ensuite soumis à des opérations de découpe, visant à ménager, à travers la ceinture annulaire 3B, des fentes étroites correspondant aux ouvertures précitées, espacées les unes des autres le long de la circonférence de la ceinture 3B. De préférence, les fentes sont légèrement cintrées pour qu'à l'issue de l'opération ultérieure de déformation radiale de la ceinture annulaire 3B, destinée à former l'élément en volume, le bord 70A-70J déformé radialement s'inscrive dans un plan sensiblement horizontal, et forme ainsi une face d'appui sensiblement horizontale et plane. De préférence, l'étape de découpe en question est réalisée en attachant l'élément de couvercle à un mandrin rotatif afin de présenter successivement différents secteurs angulaires de la ceinture annulaire 3B du couvercle à un faisceau laser de découpe, qui réalise des traits de coupe formant des fentes par l'extérieur de la ceinture annulaire 3B. Puis, une fois les fentes ainsi réalisées, des éléments en volume sont formés en repoussant le bord inférieur 70A-70J de chaque fente vers l'intérieur du couvercle 3, par exemple par emboutissage de la matière située au niveau dudit bord 70A-70J et sous ce dernier, en vue d'obtenir une série de « goussets » de verrouillage faisant saillie de la face interne de la ceinture annulaire 3B.

Selon un exemple alternatif de procédé de fabrication selon l'invention, il est également possible de réaliser les ouvertures (là encore par exemple sous la forme de fentes cintrées) sur une bande métallique plate, puis de réaliser, sur cette bande métallique plate, les éléments en volume en emboutissant ladite bande métallique plate au niveau de chaque ouverture pour en déformer le bord inférieur, et ainsi obtenir une bande métallique plate à partir de laquelle font saillie des goussets semblables à ceux décrits précédemment, goussets qui viennent de matière avec la bande métallique plate. Le procédé comporte alors dans ce cas une étape ultérieure de cintrage de la bande métallique pourvue de goussets, afin d'obtenir une ceinture annulaire pourvue de goussets faisant saillie de sa face intérieure. Ensuite, le procédé comporte dans ce cas une opération d'assemblage (par exemple par soudure) de la ceinture munie de goussets ainsi obtenue à un élément de fermeture discoïde, afin d'obtenir un sous-ensemble de couvercle complet. Selon encore une autre possibilité, la ceinture discoïde munie de goussets pourrait être rapportée sur la face intérieure d'une ceinture externe annulaire elle-même déjà solidaire d'un élément de fermeture discoïde.

S'agissant par ailleurs du mode de réalisation des figures 17 à 19, le procédé de fabrication correspondant se caractérise cette fois par le fait que l'étape de réalisation de l'ouverture peut éventuellement être effectuée après l'étape de formation de l'élément en volume. Par exemple, pour obtenir l'autocuiseur des figures 17 à 19, un élément de couvercle métallique est tout d'abord fabriqué par emboutissage d'un flanc métallique discoïde afin d'obtenir un élément de couvercle comportant un élément de couverture 3A discoïde qui se prolonge à sa périphérie par une ceinture annulaire 3B. La ceinture annulaire 3B en question est ensuite soumise à des opérations d'emboutissage visant à déformer localement la ceinture annulaire, de préférence sur toute sa hauteur, pour former des excroissances radiales dirigées vers le centre du couvercle 3. Ces excroissances radiales sont ensuite découpées de façon à être munies d'une fente horizontale destinée à permettre le passage et la capture du rebord annulaire 60, comme illustré aux figures. Il est par ailleurs tout à fait envisageable, selon un mode de réalisation alternatif, de découper tout d'abord la jupe annulaire puis de l'emboutir pour obtenir l'autocuiseur des figures 17 à 19.

La cuve 2 est quant à elle fabriquée par exemple par emboutissage d'un flan métallique, permettant d'obtenir un élément de cuve cylindrique pourvu à son bord supérieur libre 2C d'une collerette qui s'étend radialement vers l'extérieur. Ladite collerette est ensuite découpée pour former des encoches 61A-61J de passage des excroissances 5A-5J de verrouillage du couvercle 3.

En définitive, l'invention permet, en particulier dans le mode de réalisation préférentiel des figures 1 à 16, d'obtenir facilement et à coût réduit un système de verrouillage à baïonnette particulièrement robuste et efficace, en optimisant la quantité de matière requise, grâce à la mise en œuvre d'épaisseurs de métal réduites. L'invention permet ainsi, dans le mode de réalisation des figures 1 à 16, de fabriquer un couvercle 3 métallique à partir d'un flan d'épaisseur inférieure à 1 mm, et par exemple comprise entre 0,6 et 1 mm, plus préférentiellement de l'ordre de 0,9 mm. De la même façon, la cuve 2, avec son rebord annulaire 60, peut être fabriquée par formage d'un flan métallique d'épaisseur initiale inférieure à 1 mm, par exemple de l'ordre de 0,8 ou 0,9 mm, étant entendu que la mise en œuvre de certaines techniques de formage (emboutissage, étirage...) peut conduire la paroi latérale 2B de la cuve 2 à présenter une épaisseur inférieure à l'épaisseur initiale du flan et le rebord latéral 60 à présenter une épaisseur supérieure à l'épaisseur initiale du flan. La mise en oeuvre d'autres techniques de formage (hydroformage, fluotournage...) pourrait conduire à des évolutions d'épaisseur différentes.

L'autocuiseur selon l'invention est donc susceptible de présenter un poids significativement inférieur à celui des autocuiseurs à baïonnette de l'art antérieur.

L'invention permet en outre d'obtenir des moyens de verrouillage à baïonnette dont les composants viennent directement de matière avec la cuve 2 et le couvercle 3, sans nécessité d'utiliser des pièces rapportées telles qu'un étrier, des oreilles, des mâchoires ou des segments.

### POSSIBILITE D'APPLICATION INDUSTRIELLE

L'invention trouve son application industrielle dans la conception, la fabrication et l'utilisation d'appareils de cuisson d'aliments.

## Revendications

1. Appareil de cuisson (1) d'aliments sous pression comportant au moins :
- une cuve (2) et un couvercle (3) destiné à être verrouillé relativement à la cuve (2) pour former avec cette dernière une enceinte de cuisson apte à monter en pression,
- des moyens de verrouillage à baïonnette formant des première et deuxième séries d'excroissances (5A - 5J, 6A - 6J) qui sont solidaires respectivement de l'enveloppe du couvercle (3) et de l'enveloppe de la cuve (2) et qui sont destinées à coopérer ensemble pour assurer le verrouillage du couvercle (3) relativement à la cuve (2),
ledit appareil étant **caractérisé en ce que** chaque excroissance d'au moins l'une desdites séries est constituée par un élément en volume qui présente des faces convexe (50A - 50J) et concave (51A - 51J) opposées, et qui est formé par une déformation radiale localisée de l'enveloppe correspondante, chaque élément en volume étant associé à une ouverture respective (7A - 7J) ménagée à travers l'enveloppe correspondante et délimitée par au moins un bord (70A - 70J), ladite déformation radiale localisée étant positionnée relativement à ladite ouverture respective de façon qu'au moins une portion dudit bord (70A - 70J) soit déformée radialement et fasse partie dudit élément en volume associé.

2. Appareil (1) selon la revendication 1 **caractérisé en ce que** ladite déformation radiale localisée est obtenue par emboutissage de l'enveloppe correspondante.

3. Appareil (1) selon la revendication 1 ou 2 **caractérisé en ce que** chaque élément en volume est formé par un crevé.

4. Appareil (1) selon l'une des revendications 1 à 3 **caractérisé en ce que** ladite au moins une portion dudit bord (70A - 70J) présente un profil courbe.

5. Appareil (1) selon l'une des revendications 1 à 4 **caractérisé en ce que** ledit bord (70A - 70J) de l'ouverture (7A - 7J) forme le sommet dudit élément en volume.

6. Appareil (1) selon l'une quelconque des revendications 1 à 5 **caractérisé en ce que** ledit bord (70A - 70J) forme une face d'appui contre laquelle est destinée à venir en appui une excroissance (6A - 6J) de l'autre série.

7. Appareil (1) selon l'une des revendications 1 à 6 **caractérisé en ce que** chaque élément en volume est formé par une coque délimitée par un bord périphérique dont une première portion (700A) est localisée sur, et attachée à, l'enveloppe correspondante et dont une deuxième portion est libre et forme une face d'appui contre laquelle est destinée à venir en appui une excroissance (6A - 6J) de l'autre série, ladite première portion s'étendant au moins en partie selon un profil évasé du bas vers le haut, par exemple un profil sensiblement en V ou en U.

8. Appareil (1) selon l'une des revendications précédentes **caractérisé en ce que** lesdits éléments en volume forment les excroissances (5A - 5J) de la première série solidaires de l'enveloppe du couvercle (3).

9. Appareil (1) selon la revendication 8 **caractérisé en ce que** l'enveloppe du couvercle (3) inclut un élément de couverture discoïde ainsi qu'une ceinture annulaire (3B) qui s'élève entre un premier bord circulaire (30B) solidaire de l'élément de couverture discoïde et un second bord circulaire libre (31B), lesdits éléments en volume étant localisés sur ladite ceinture, à distance dudit second bord circulaire libre.

10. Appareil (1) selon l'une quelconque des revendications 8 et 9 **caractérisé en ce que** la cuve (2) comprend un fond (2A) ainsi qu'une paroi latérale annulaire (2B) qui s'élève entre ledit fond (2A) et un bord supérieur libre (2C) délimitant une ouverture d'accès à l'intérieur de la cuve (2), les excroissances (6A - 6J) de la deuxième série étant formées par un rebord annulaire (60) qui déborde vers l'extérieur à partir dudit bord supérieur libre, des encoches de passage (61A - 61J) desdits éléments en volume étant ménagées à travers ledit rebord annulaire (60), ledit rebord annulaire (60) incluant une collerette qui s'étend sensiblement radialement et vers l'extérieur à partir dudit bord supérieur libre (2C), ainsi qu'une jupe (600) qui s'étend sensiblement vers le bas entre un bord supérieur (600A) solidaire de la collerette et un bord inférieur libre (600B) contre lequel les excroissances de la première série sont destinées à venir en appui pour verrouiller le couvercle (3) relativement à la cuve (2).

11. Procédé de fabrication d'un appareil (1) de cuisson d'aliments sous pression comportant au moins :
- une cuve (2) et un couvercle (3) destiné à être verrouillé relativement à la cuve (2) pour former avec cette dernière une enceinte de cuisson apte à monter en pression,
- des moyens de verrouillage à baïonnette formant des première et deuxième séries d'excroissances (5A - 5J, 6A - 6J) qui sont solidaires respectivement de l'enveloppe du couvercle (3) et de l'enveloppe de la cuve (2) et qui sont destinées à coopérer ensemble pour assurer le verrouillage du couvercle (3) relativement à la cuve (2),
ledit procédé étant **caractérisé en ce que** chaque excroissance d'au moins l'une desdites séries est constituée par un élément en volume qui présente des faces convexe (50A - 50J) et concave (51A - 51J) opposées, ledit procédé comportant une étape de formation dudit élément en volume par déformation radiale localisée de l'enveloppe correspondante, ledit procédé comprenant une étape de réalisation, à travers ladite enveloppe, d'une ouverture délimitée par au moins un bord (70A - 70J) qui fait partie dudit élément en volume associé.

12. Procédé selon la revendication 11 **caractérisé en ce que** ladite déformation radiale localisée de l'enveloppe est réalisée par emboutissage de la matière constitutive de l'enveloppe.

13. Procédé selon la revendication 11 ou 12 **caractérisé en ce que** ladite étape de réalisation de l'ouverture est effectuée avant l'étape de formation dudit élément en volume, ladite étape de formation dudit élément en volume étant mise en œuvre pour déformer radialement ledit bord (70A - 70J) afin qu'il présente un profil courbe et fasse partie dudit élément en volume associé.

14. Procédé selon la revendication 11 ou 12 **caractérisé en ce que** ladite étape de réalisation de l'ouverture est effectuée après l'étape de formation dudit élément en volume, ladite étape de réalisation de l'ouverture étant mise en oeuvre pour que ledit bord (70A - 70J) fasse partie dudit élément en volume associé et présente ainsi un profil courbe.

15. Procédé selon l'une quelconque des revendications 11 à 14 **caractérisé en ce que** ladite ouverture est réalisée par une opération de découpe au laser de l'enveloppe.

## Patentansprüche

1. Druckkochtopf (1) für Nahrungsmittel, umfassend mindestens:
- eine Wanne (2) und einen Deckel (3), der dazu bestimmt ist, in Bezug zur Wanne (2) verriegelt zu werden, um mit dieser letztgenannten einen Kochraum zu bilden, der geeignet ist, unter Druck gesetzt zu werden,
- Bajonettverriegelungsmittel, die erste und zweite Reihen von Ausstülpungen (5A-5J, 6A-6J) bilden, die mit der Hülle des Deckels (3) bzw. der Hülle der Wanne (2) verbunden sind, und die dazu bestimmt sind, zusammenzuwirken, um die Verriegelung des Deckels (3) in Bezug zur Wanne (2) zu gewährleisten,
wobei der Kochtopf **dadurch gekennzeichnet ist, dass** jede Ausstülpung von mindestens einer der Reihen aus einem Volumenelement gebildet ist, das entgegengesetzte konvexe (50A-50J) und konkave (51A-51J) Seiten aufweist, und das von einer lokalisierten radialen Verformung der entsprechenden Hülle gebildet ist, wobei jedes Volumenelement einer jeweiligen Öffnung (7A-7J) zugeordnet ist, die durch die entsprechende Hülle hindurch vorgesehen und durch mindestens einen Rand (70A-70J) begrenzt ist, wobei die lokalisierte radiale Verformung in Bezug zu der jeweiligen Öffnung derart positioniert ist, dass mindestens ein Abschnitt des Randes (70A-70J) radial verformt wird und Teil des zugehörigen Volumenelements ist.

2. Kochtopf (1) nach Anspruch 1, **dadurch gekennzeichnet, dass** die lokalisierte radiale Verformung durch Tiefziehen der entsprechenden Hülle erhalten wird.

3. Kochtopf (1) nach Anspruch 1 oder 2, **dadurch gekennzeichnet, dass** jedes Volumenelement von einem Einschnitt gebildet ist.

4. Kochtopf (1) nach einem der Ansprüche 1 bis 3, **dadurch gekennzeichnet, dass** der mindestens eine Abschnitt des Randes (70A-70J) ein gekrümmtes Profil aufweist.

5. Kochtopf (1) nach einem der Ansprüche 1 bis 4, **dadurch gekennzeichnet, dass** der Rand (70A-70J) der Öffnung (7A-7J) die Spitze des Volumenelements bildet.

6. Kochtopf (1) nach einem der Ansprüche 1 bis 5, **dadurch gekennzeichnet, dass** der Rand (70A-70J) eine Stützfläche bildet, an der eine Ausstülpung (6A-6J) der anderen Reihe zur Anlage gelangen soll.

7. Kochtopf (1) nach einem der Ansprüche 1 bis 6, **dadurch gekennzeichnet, dass** jedes Volumenelement von einer Schale gebildet ist, die durch einen Umfangsrand begrenzt ist, von dem ein erster Abschnitt (700A) auf der entsprechenden Hülle lokalisiert und an dieser befestigt ist, und von dem ein zweiter Abschnitt frei ist und eine Stützfläche bildet, an der eine Ausstülpung (6A-6J) der anderen Reihe zur Anlage gelangen soll, wobei sich der erste Abschnitt zumindest teilweise nach einem erweiterten Profil von unten nach oben erstreckt, beispielsweise nach einem im Wesentlichen V- oder U-förmigen Profil.

8. Kochtopf (1) nach einem der vorhergehenden Ansprüche, **dadurch gekennzeichnet, dass** die Volumenelemente Ausstülpungen (5A-5J) der ersten Reihe bilden, die mit der Hülle des Deckels (3) verbunden sind.

9. Kochtopf (1) nach Anspruch 8, **dadurch gekennzeichnet, dass** die Hülle des Deckels (3) ein scheibenförmiges Abdeckelement sowie einen ringförmigen Bund (3B) einschließt, der sich zwischen einem ersten kreisförmigen Rand (30B), der mit dem scheibenförmigen Abdeckelement verbunden ist, und einem zweiten freien kreisförmigen Rand (31B) erhebt, wobei die Volumenelemente auf dem Bund in einem Abstand zum zweiten freien kreisförmigen Rand lokalisiert sind.

10. Kochtopf (1) nach einem der Ansprüche 8 und 9, **dadurch gekennzeichnet, dass** die Wanne (2) einen Boden (2A) sowie eine ringförmige Seitenwand (2B) umfasst, die sich zwischen dem Boden (2A) und einem freien oberen Rand (2C) erhebt, der eine Zugangsöffnung zum Inneren der Wanne (2) begrenzt, wobei die Ausstülpungen (6A-6J) der zweiten Reihe von einer ringförmigen Umrandung (60) gebildet sind, die vom freien oberen Rand nach außen überragt, wobei Durchgangskerben (61A-61J) der Volumenelemente durch die ringförmige Umrandung (60) hindurch vorgesehen sind, wobei die ringförmige Umrandung (60) einen Kragen einschließt, der sich im Wesentlichen radial und nach außen vom freien oberen Rand (2C) aus erstreckt, sowie eine Schürze (600), die sich im Wesentlichen nach unten zwischen einem oberen Rand (600A), der mit dem Kragen verbunden ist, und einem freien unteren Rand (600B) erstreckt, an dem die Ausstülpungen der ersten Reihe zur Anlage gelangen sollen, um den Deckel (3) in Bezug zur Wanne (2) zu verschließen.

11. Verfahren zur Herstellung eines Druckkochtopfs (1) für Nahrungsmittel, mindestens umfassend:
- eine Wanne (2) und einen Deckel (3), der dazu bestimmt ist, in Bezug zur Wanne (2) verriegelt zu werden, um mit dieser letztgenannten einen Kochraum zu bilden, der geeignet ist, unter Druck gesetzt zu werden,
- Bajonettverriegelungsmittel, die erste und zweite Reihen von Ausstülpungen (5A-5J, 6A-6J) bilden, die mit der Hülle des Deckels (3) bzw. der Hülle der Wanne (2) verbunden sind, und die dazu bestimmt sind, zusammenzuwirken, um die Verriegelung des Deckels (3) in Bezug zur Wanne (2) zu gewährleisten,
wobei das Verfahren **dadurch gekennzeichnet ist, dass** jede Ausstülpung von mindestens einer der Reihen aus einem Volumenelement gebildet ist, das entgegengesetzte konvexe (50A-50J) und konkave (51A-51J) Seiten aufweist, wobei das Verfahren einen Schritt der Bildung des Volumenelements durch lokalisierte radiale Verformung der entsprechenden Hülle umfasst, wobei das Verfahren einen Schritt der Herstellung einer Öffnung durch die Hülle hindurch umfasst, die von mindestens einem Rand (70A-70J) begrenzt ist, der Teil des zugehörigen Volumenelements ist.

12. Verfahren nach Anspruch 11, **dadurch gekennzeichnet, dass** die lokalisierte radiale Verformung der Hülle durch Tiefziehen des Materials, aus dem die Hülle besteht, hergestellt ist.

13. Verfahren nach Anspruch 11 oder 12, **dadurch gekennzeichnet, dass** der Schritt der Herstellung der Öffnung vor dem Schritt der Bildung des Volumenelements erfolgt, wobei der Schritt der Bildung des Volumenelements eingesetzt wird, um den Rand (70A-70J) radial zu verformen, so dass er ein gekrümmtes Profil aufweist und Teil des zugehörigen Volumenelements ist.

14. Verfahren nach Anspruch 11 oder 12, **dadurch gekennzeichnet, dass** der Schritt der Herstellung der Öffnung nach dem Schritt der Bildung des Volumenelements erfolgt, wobei der Schritt der Herstellung der Öffnung eingesetzt wird, so dass der Rand (70A-70J) Teil des zugehörigen Volumenelements ist und auf diese Weise ein gekrümmtes Profil aufweist.

15. Verfahren nach einem der Ansprüche 11 bis 14, **dadurch gekennzeichnet, dass** die Öffnung durch einen Schritt des Laserschneidens der Hülle hergestellt wird.

## Claims

1. A food pressure cooking appliance (1) including at least:
- a bowl (2) and a lid (3) intended to be locked relative to the bowl (2) to form with the latter a cooking chamber adapted to rise in pressure,
- bayonet locking means forming first and second series of protrusions (5A - 5J, 6A - 6J) that are integral with the envelope of the lid (3) and the envelope of the bowl (2), respectively, and that are intended to cooperate with each other to ensure the locking of the lid (3) relative to the bowl (2),
said appliance being **characterized in that** each protrusion of at least one of said series is consisted by a volume element that has opposite convex (50A - 50J) and concave (51A - 51J) faces, and that is formed by a localized radial deformation of the corresponding envelope, each volume element being associated with a respective opening (7A - 7J) formed through the corresponding envelope and delimited by at least one edge (70A - 70J), said localized radial deformation being positioned with respect to said respective opening so that at least one portion of said edge (70A - 70J) is deformed radially and belongs to said associated volume element.

2. The appliance (1) according to claim 1, **characterized in that** said localized radial deformation is obtained by embossing of the corresponding envelope.

3. The appliance (1) according to claim 1 or 2, **characterized in that** each volume element is formed by a lancing.

4. The appliance (1) according to one of claims 1 to 3, **characterized in that** said at least one portion of said edge (70A - 70J) has a curved profile.

5. The appliance (1) according to any one of claims 1 to 4, **characterized in that** said edge (70A - 70J) of the opening (7A - 7J) forms the apex of said volume element.

6. The appliance (1) according to any one of claims 1 to 5, **characterized in that** said edge (70A - 70J) forms a bearing face against which a protrusion (6A - 6J) of the other series is intended to bear.

7. The appliance (1) according to one of claims 1 to 6, **characterized in that** each volume element is formed by a shell delimited by a peripheral edge, a first portion (700A) of which is located on, and attached to, the corresponding envelope and a second portion of which is free and forms a bearing face against which a protrusion (6A - 6J) of the other series is intended to bear, said first portion extending at least in part according to a profile flared from the bottom to the top, for example a substantially V-shaped or U-shaped profile.

8. The appliance (1) according to one of the preceding claims, **characterized in that** said volume elements form the protrusions (5A - 5J) of the first series integral with the lid (3).

9. The appliance (1) according to claim 8, **characterized in that** the envelope of the lid (3) includes a discoid cover element as well as an annular belt (3B) that rises between a first circular edge (30B) integral with the discoid cover element and a second free circular edge (31B), said volume elements being located on said belt, remote from said second free circular edge.

10. The appliance (1) according to any one of claims 8 and 9, **characterized in that** the bowl (2) comprises a bottom (2A) as well as an annular lateral wall (2B) that rises between said bottom (2A) and a free upper edge (2C) delimiting an opening of access inside the bowl (2), the protrusions (6A - 6J) of the second series being formed by an annular rim (60) that protrudes towards the outside from said free upper edge, notches (61A - 61J) for the passage of said volume elements being formed through said annular rim (60), said annular rim (60) including a flange that extends substantially radially and towards the outside from said free upper edge (2C), as well as a skirt (600) that extends substantially downward between an upper edge (600A) integral with the flange and a free lower edge (600B) against which the protrusions of the first series are intended to bear to lock the lid (3) relative to the bowl (2).

11. A method of manufacturing a food pressure cooking appliance (1) including at least:
- a bowl (2) and a lid (3) intended to be locked relative to the bowl (2) to form with the latter a cooking chamber adapted to rise in pressure,
- bayonet locking means forming first and second series of protrusions (5A - 5J, 6A - 6J) that are integral with the envelope of the lid (3) and the envelope of the bowl (2), respectively, and that are intended to cooperate with each other to ensure the locking of the lid (3) relative to the bowl (2),
said method being **characterized in that** each protrusion of at least one of said series is consisted by a volume element that has opposite convex (50A - 50J) and concave (51A - 51J) faces, said method including a step of forming said volume element by localized radial deformation of the corresponding envelope, each volume element extending, along the vertical direction, between a root and an apex, each volume element having, in projection onto a radial plane (P0 - P3), a flared profile from the root to the apex, said method including a step of making, through said envelope, an opening delimited by at least one edge (70A - 70J) that belongs to said associated volume element.

12. The method according to claim 11, **characterized in that** said localized radial deformation of the envelope is made by embossing the material constituting the envelope.

13. The method according to claim 11 or 12, **characterized in that** said step of making the opening is performed before the step of forming said volume element, said step of forming said volume element being implemented so as to radially deform said edge (70A - 70J) so that is has a curved profile and belongs to said associated volume element.

14. The method according to claim 11 or 12, **characterized in that** said step of making the opening is performed after the step of forming said volume element, said step of making the opening being implemented so that said edge (70A - 70J) belongs to said associated volume element and has hence a curved profile.

15. The method according to any one of claims 11 to 14, **characterized in that** said opening is made by an operation of laser cutting of the envelope.
